# EUROPEAN PATENT SPECIFICATION

(11) **EP 0 434 386 B1**
(45) Date of publication and mention of the grant of the patent: **10.03.1999**
(21) Application number: 90313904.6
(22) Date of filing: 19.12.1990
(51) Int. Cl.: B32B 27/32, C09J 123/08, C09J 151/06

(54) **Non-isothermal crystallizable adhesive compositions for multilayer laminated structures**
Nichtisothermische kristallisierbare Klebstoffzusammensetzungen für mehrschichtiges Verbundmaterial
Compositions adhésives crystallisables non-isothermes, pour structures laminés

(30) Priority: 21.12.1989 US 455537
(43) Date of publication of application: 26.06.1991
(73) Proprietor: THE DOW CHEMICAL COMPANY, Midland, Michigan 48674 (US)
(72) Inventor: Tabor, Ricky Lynn, Lake Jackson, Texas 77566 (US); Lancaster, Gerald Martin, Freeport, Texas 77541 (US); Potts, Michael Wayne, Angleton, Texas 77515 (US); Butler, Thomas Irvin, Lake Jackson, Texas 77566 (US)
(74) Representative: Burford, Anthony Frederick

(56) References cited:
- EP-A- 0 171 777
- EP-A- 0 276 570
- GB-A- 2 119 389
- US-A- 4 230 830
- US-A- 4 487 885

## Description

This invention pertains to crystallizable thermoplastic resin blends having a non-isothermal crystallization half-life of less than thirty seconds. The resin blends are useful as an adhesive layer(s) in forming improved multilayer laminated film structures by a blown film process.

There is an increasingly strong trend to replace glass, metal, and paper containers with plastic containers to package goods for storage or sale, e.g., milk and juice containers. The driving force behind this trend includes many factors, e.g., improved energy efficiency in producing the containers, customer preference, reduced product loss due to breakage, reduced shipping costs, improved storage geometry, and improved storage performance. In general, the plastic containers are prepared by known techniques from a multilayer laminated film structure comprising (a) a barrier layer(s), (b) a structural component, (c) a sealant layer, (d) an adhesive layer and, optionally, (e) a scrap layer.

Most such structures contain one or more barrier layers designed to keep the contents of the package or container effectively within the confines of the package or container and to keep the external environment, such as oxygen or water, from entering the contents. The purpose of the structural component is usually to provide some means of supporting the product being contained. The sealant layer provides a means of closing (i.e., sealing) the package after the contents of the package or container has been introduced. Generally heat and pressure are used to close or seal the package or container although more recent technological advances use radio frequency or ultrasonic sealing means and techniques. A scrap layer (e.g., reground, off-grade polymer) can be and typically is used in the multilayer structure. The scrap layer may act as a structural component, but the main function of the scrap layer is to improve the economics of producing the package. The adhesive component holds all of the other components together, giving the package or container structural integrity. The external layer can be printed for product identification, and may be any of the layers discussed above. Typical multilayer film manufacturing techniques utilize cast and/or blown multilayer film.

Many adhesive layers are resin blends of thermoplastic polymers. The thermoplastic polymers form a known class of compounds which includes, for example, high density polyethylene (HDPE), low density polyethylene (LDPE), linear low density polyethylene (LLDPE), and ethylene/vinyl acetate (EVA) copolymers. The thermoplastic polymers can also have various unsaturated carboxylic acids, carboxylic acid anhydrides, or other acid derivatives grafted onto, or polymerized into the polymer. The purpose of the grafted portion of the resin is usually to enhance the adherence of the polymer to a substrate, especially polar substrates such as polyesters, polyamides, or ethylene/vinyl alcohol (EVOH) copolymers.

Mito et al. in US-A-4,370,388 (Mitsui) describes a laminated multilayer structure which contains as one of the layers an adhesive composition consisting of (a) HDPE grafted with a dicarboxylic acid or functional derivatives there-of, (b) ethylene/4-methyl pentene copolymer, and (c) a "rubbery" synthetic polymer, with ethylene/propylene copolymers preferred as the rubbery polymer.

Another example, Adur et al. in US-A-4,537,836 (Chemplex) describes a composite structure wherein a three component resin blend consisting essentially of (a) a graft copolymer, (b) LDPE, LLDPE, or mixtures thereof and (c) a homopolymer or copolymer containing greater than 50 weight percent of an alpha-olefin of 4-15 carbon atoms was alleged to be useful as the adhesive layer.

EP-A-0171777 discloses adhesive blends of grafted HDPE with at least one polymer selected from ungrafted LLDPE and LDPE in which the grafted HDPE has succinic and/or succinic anhydride groups grafted along the HDPE copolymer chain. The LLDPE may have a density of 0.88 g/cm³ to 0.935 g/cm³ and an ASTM D-1238(E) melt flow index of 0.1 g/10 min to 2000 g/10 min; the LDPE may have a density of 0.90 g/cm³ to 0.935 g/cm³ and a melt flow index of 0.5 g/10 min to 120 g/10 min, and the pregrafted HDPE may have a density of 0.94 g/cm³ to 0.965 g/cm³ and a melt flow index of 0.1 g/10 min to 500 g/10 min. The anhydride or acid groups may be provided by grafting maleic acid or maleic anhydride into the HDPE in an amount of 0.001 to 10 weight %. The ratio of grafted HDPE to LLDPE and/or LDPE may be 0.5/99.5 to 99.5/0.5. The exemplified blend contains 5 to 50% maleic anhydride. There are no references to non-isothermal crystallization half-life or to blown film processes. Ethylene-vinyl alcohol is included amongst specified substances for which the blend is an adhesive.

US-A-4230830 discloses adhesive blends of (a) 80 to 99 weight % of a first olefinic polymer selected from non-polar ethylene polymers and copolymers having a density of 0.930 g/cm³ to 0.965 g/cm³ and copolymers of ethylene with up to 30 weight % of at least one C₄ - C₁₂ ethylenically unsaturated ester and (b) 1 to 19 weight % of a second olefinic polymer selected from non-polar ethylene polymers and copolymers having a density of 0.945 g/cm³ to 0.965 g/cm³ and terpolymers of ethylene, at least one C₃ - C₆ α-olefin, and at least one non-conjugated diene, the second olefinic polymer being thermally grafted with an unsaturated acid or anhydride to give a copolymer having 0.02 to 4.0 weight % grafted succinic groups and subject to the proviso that the second olefinic polymer is a said terpolymer when the first olefinic polymer is a said ethylene - ester copolymer. The blend is primarily intended for bonding to polyamide. Specified films to be bonded to polyamide include ethylene vinyl acetate film. No reference is made to non-isothermal crystalline half-life or to blown film processes.

US-A-4,487,885 discloses adhesive blends of (a) 0.1 to less than 40 weight % of a graft copolymer of 70 to 99.95 weight % polyethylene backbone grafted with 30 to 0.05 weight % of ethylenically unsaturated carboxylic acid or carboxylic acid derivative; (b) 0.1 to 99 weight % LDPE or ethylene - unsaturated ester copolymers, or LLDPE or mixtures thereof; and (c) 0.1 to 60 weight % of a blending component comprising a homopolymer or copolymer, or mixtures thereof, containing greater than 50 weight % C₄ - C₅ α-olefin. The pregrafted polyethylene of component (a) can have a density of 0.910 g/cm³ to 0.970 g/cm³; the polymer of component (b) can have a density of 0.91 g/cm³ to 0.97 g/cm³, preferably 0.91 g/cm³ to 0.93 g/cm³ and a melt index of 0.1 g/10 min to 100 g/10 min; and the polymer of component (c) can have a density of 0.88 g/cm³ to 0.93 g/cm³ and a melt index of 0.5 to 50 g/10 min. Specified substrates for the adhesive blend include ethylene vinyl alcohol polymers. There is no reference to non-isothermal crystalline half-life or to blown film processes.

While many of these polymer blends are taught to be useful as adhesive components in multilayer structures, not all of these blends have adequate performance in adhesion to hydrolyzed ethylene vinyl acetate copolymers or in blown multilayer films. There continues to be a commercial need for an adhesive with more predictable properties and/or better economics.

The adhesive strength influencing difference between blown film and cast film manufacturing techniques is primarily a function of the film cooling rate. In a cast film process, the cooling rate, also known as quench intensity, is fairly fast relative to that used in blown film processes. Blown film is cooled by air whereas cast film is cooled by contact with a chilled roll. The cooling of the film results in crystallization of the adhesive layer of the film forming resins used. Since the degree of quench intensity affects crystallization, the cooling rate is considerably slower for blown film processes, and because of this, crystallization rates are correspondingly slower, resulting in less effective utilization of the adhesive portion of the multilayer. This invention alleviates this inherent deficiency of the blown film process. By increasing the non-isotherm crystallization rate of the adhesive layer and reducing the non-isothermal crystallization half-life of the adhesive layer to less than 30 seconds, adhesive strength of the adhesive layer to the barrier layer is improved, especially adhesion to a polar barrier layer such as EVOH.

According to a first aspect, the present invention provides the use as an adhesive for a polar polymer layer in a blown multilayer film article of a thermoplastic resin blend comprising (i) at least one unmodified linear low density polyethylene ("LLDPE") having a density of 0.89 g/cm³ to 0.93 g/cm³ and a melt index (ASTM D-1238 Condition 190/2.16) of 0.1 grams/10 minutes to 250 grams/10 minutes and (ii) a graft modified high density polyethylene ("HDPE") having a pregrafting density of 0.945 g/cm³ to 0.97 g/cm³, a pregrafting melt index (ASTM D-1238 Condition 190/2.16) of 0.1 grams/10 minutes to 200 grams/10 minutes and, as the graft modifier, an ethylenically unsaturated carboxylic acid or anhydride in an amount of 0.02 to 3.0 weight percent (based on the weight of the HDPE polymer), the blend having a non-isothermal crystallization half-life, as determined by differential scanning calorimetry (as described hereinafter), of less than 30 seconds. The novel resin blends are especially useful as adhesives in blown film multilayer structures. Containers prepared from multilayer laminated film structures containing the novel resin blends have improved properties.

In a second aspect, the invention provides a process of preparing a laminated multilayer film structure by a blown film process in which a polar polymer barrier layer is adhered to another layer by an intermediate thermoplastic resin blend adhesive layer, characterized in that said blend is a blend in accordance with the aforementioned first aspect of the invention.

In a third aspect, the invention provides a laminated multilayer film structure comprising a polar polymer barrier layer adhered to another layer by an intermediate thermoplastic resin blend adhesive layer and prepared by a blown film process, characterized in that said blend is a blend in accordance with the aforementioned first aspect of the invention.

Thermoplastic resins, as noted above, form a known class of polymers as described in Modern Plastics Encyclopedia, Volume 65, Number 11. Essentially any member of this known class can be used herein, with the provision that the thermoplastic resin is capable of forming a film structure. Members of this class of materials include aliphatic polyolefins, and particular polyethylene.

Preferably, the at least one unmodified LLDPE (i) is present in an amount of 30 to 98 weight percent, and the graft modified HDPE is present in an amount of 2 to 70 weight percent. Preferably, the resin blend includes 0.03 to 0.24 weight percent of the graft modifier.

The LLDPE used in the blends used for this invention can be LLDPE which is a copolymer of ethylene with an alpha-olefin of C₃-C₁₂, preferably an alpha-olefin from C₃-C₈, such as propylene, butene-1, pentene-1, hexene-1, 4-methyl pentene-1, or octene-1, especially octene-1, and can be a mixture of olefins, such as propylene/octene or 4-methyl pentene-1/octene in an amount sufficient to yield a density from 0.89 to 0.93 grams/cubic centimeter, such that the non-isothermal crystallization half life of the total resin blend is less than 30 seconds. The LLDPE used in this invention may be an Ultralow-Density Polyethylene (ULDPE) having a density below 0.915 grams/ cubic centimeter, such as that described in Modern Plastics Encyclopedia, Volume 65, Number 11. Alternatively, the LLDPE used for this invention may be a terpolymer of ethylene and two of the alpha-olefins having 3-12 carbon atoms. A terpolymer of ethylene, propylene (C₃), and octene (C₈) is an example. The molecular weight of the LLDPE used for this invention, as indicated by melt index (MI or I₂) is measured according to ASTM D-1238 Condition 190/2.16 (formerly Condition E). The melt index of the LLDPE is from 0.1 grams/10 minutes to 250 grams/10 minutes, especially from 0.2 grams/10 minutes to 25 grams/10 minutes. The LLDPE used in this invention is unmodified; that is, the chemical structure of the polymer is not changed by chemical grafting or other chemical means.

In a preferred embodiment, the component (i) comprises a first linear low density polyethylene copolymer having a melt index from 0.1 grams/10 minutes to 25 grams/10 minutes and a density from 0.90 grams per cubic centimeter to 0.93 grams per cubic centimeter and a second linear low density polyethylene copolymer having a melt index from 0.1 grams/10 minutes to 25 grams/10 minutes and a density from 0.89 grams per cubic centimeter to 0.92 grams per cubic centimeter.

In another embodiment of the present invention, the component (i) above is a blend of 5 to 80 weight percent polybutene polymer with 95 to 20 weight percent of the at least LLDPE.

The HDPE used in this invention has a pregrafting density in the range of 0.945 to 0.97 grams/cubic centimeter and a MI from 0.1 to 200, especially 1 to 45, grams/10 minutes. The HDPE can be a homopolymer of ethylene or it can be a copolymer of ethylene and at least one C₃-C₁₂ alpha-olefin(s). The alpha-olefins are typically used in sufficient quantity to cause the HDPE copolymer to have a density in the range from 0.945 to 0.97 grams/cubic centimeter.

The ethylenically unsaturated carboxylic acids (or their anhydrides) content of the grafted HDPE is from 0.02 percent to 3.0 percent by weight of the polymer, and is grafted onto the HDPE in any of the known manners, such as the extrusion grafting technique described in Strait et al. US-A-4,762,890 (The Dow Chemical Company).

Types of grafted copolymers effective in this invention include graft copolymers of HDPE and maleic anhydride (MAH), a mixture of methyl nadic anhydrides, x-methyl nadic acid, or 7-oxabicyclo(2.2.1)hept-5-ene dicarboxylic acid anhydride.

The barrier layer in multilayer structures is normally comprised of a polar polymer. Any of the common polar barrier layers, such as nylon-6, polyester or polyamide, can be used but EVOH copolymers having a final ethylene content of from 2 percent to 60 percent by weight of the polymer and melt index of from 0.2 to 50 grams/10 minutes are presently preferred, and EVOH copolymers having a final ethylene content from 15 to 45, especially 29 to 44, percent by weight of the polymer and melt index of from 0.5 to 20 grams/10 minutes are most preferred.

The structural layer, sealant layer, and optional scrap layer each may be one or more of the following: LDPE, LLDPE, HDPE, medium density polyethylene (MDPE), polypropylene (PP), ethylene/propylene copolymers, ethylene/vinyl acetate copolymers, ethylene/methyl acrylate copolymers, ethylene/methyl methacrylate copolymers, ethylene/acrylic acid copolymers, ethylene/methacrylic acid copolymers, various ionomers thereof, ethylene/carbon monoxide copolymers, and ethylene/butyl acrylate copolymers.

The multilayer structure may contain any number of layers, in any suitable combination, with the provision that the adhesive layer defined by this invention be adjacent to at least one side of the barrier layer.

Multilayer structures using the adhesive composition of the present invention are made by a blown film process, preferably by a single air external ring blown film process.

This invention relates to a method for consistently improving bond level between two or more layers of a multilayer laminated structure, especially when those layers consist of an adhesive layer defined by blends of the present invention and a barrier layer of an ethylene/vinyl alcohol copolymer.

### EXPERIMENTAL

Three layer blown films are prepared in accordance with this invention by fabrication on a Johnson 20.32 cm three layer (three manifold) coextrusion blown film unit equipped with a single air ring cooled annular die fed by three extruders. The multilayer laminated film structure is an A/B/C configuration in which:
(I) The "A-layer" is the oxygen barrier layer and is extruded through the outer annular die as the outer layer. The "A-layer" extruder is a 6.35 cm Egan having an L/D ratio of 24:1. This extruder is used to feed a commercially available hydrolyzed ethylene/vinyl acetate (EVOH) copolymer (SOARNOL DT produced by Nippon Goshei) having a melt index of 3 grams/10 minutes, a density of 1.21 grams/cm³ and an ethylene content of 40 mole percent to the outer layer. This layer is maintained at a thickness of approximately 0.4 mils (0.010 mm). The overall temperature profile of this extruder is maintained at approximately 218°C.
(II) The "B-layer" is the adhesive layer and is extruded through the middle annular die as the middle layer. The "B-layer" extruder is a 6.35 cm Egan having a screw L/D ratio of 24:1. This extruder is used to feed the middle annular die to form the center adhesive layer being evaluated. The thickness of this layer is approximately 0.3 mils (0.008 mm).
(III) The "C-layer" is the structural and barrier layer and is extruded through an Egan 5.08 cm extruder having a length to diameter (L/D) ratio of 24:1. This Egan extruder is used to feed an ethylene/acrylic acid copolymer (MI=1.5, acrylic acid content=9 percent) to the inner annular die to form the inner "C" layer, The thickness of the "C" layer is 1.2 mils (0.030 mm). The overall temperature profile of this extruder is maintained at approximately 218°C.

The peel strength between the EVOH layer and the adhesive layer is determined by initiating the separation of the two layers by hand (acetone on the end of a cotton swab was occasionally used to reduce the peel strength to grasp the sample for beginning the test), then cutting a 2.54 cm strip out of the film. Peel strengths are then determined using an Instron testing device at a peel rate of 5.08 cm/minute.

An alternate screening method of evaluating the adhesive resins of this invention employs a heat seal measurement after making films of the desired materials separately. Films of the thermoplastic adhesives used in heat seal testing are blown on a 1.905 cm Killion blown film unit, using a temperature profile of 163/177/204°C, for Zone 1/Zone 2/Die respectively. A minimum of 340.5 gms of resin is required to blow film on the 1.905 cm Killion extruder with a 2.54 cm film die. The films are fabricated so that they were 1.5 mils (0.038 mm) thick (+/- 0.1 mil (0.003 mm)) and had a 7.62-10.16 cm lay flat. The freshly made films are heat sealed to the appropriate substrate within one week of fabrication. Meanwhile, the samples are stored in ZIPLOC™ bags in a dessicator until use.

Various EVOH polymers, with varying percent ethylene, are made into films by compression molding between pieces of glass reinforced polytetrafluoroethylene (PTFE). The molded platens are maintained at 227°C and approximately 5 grams of the EVOH to be molded are placed on the PTFE cloth and heated without pressure for two minutes, then pressed at 68.95 MPa for one minute and quenched between ambient temperature platens.

Heat seals of the two films made by the methods described above are made using an Asko 9-point heat sealer. The temperatures at each sealing point were equilibrated at 160°C for several hours prior to use. The instrument was slightly modified by adding adjustable locking leveling bolts to the bottom of the heat sealer, to assure that the mechanism maintained a level stance. The levelness of the instrument was assured prior to each use via a liquid bubble carpenter's level. A PTFE impregnated glass cloth covered the seal bars of the instrument as purchased from Asko. This cloth was removed to allow direct contact of the seal bars with the multilayer film structure being sealed. The heat seal procedure used required the use of 3 mils (0.08 mm) thick Mylar™ (urethane coated polyethyleneterephthalate made by DuPont). The sealing pressure is held constant at 275 kPa. The dimensions of the film samples tested are 7.6 cm by 20.3 cm. The adhesive films evaluated are 1.4 to 1.6 mils (0.037 to 0.043 mm) thick. The film structure utilized is as follows:

| |
|---|
| SEAL BARS (Surface Measures 3.175 cm by 1.27 cm) |
| MYLAR™ film (release agent against the adhesive) |
| ADHESIVE film |
| EVOH film |
| RUBBER SUPPORT PAD |
| (Prior to each seal, the lower surfaces of the seal bars were visually inspected to insure that no residual polymer or oxidative build-up had occurred which could cause spurious pressure sites. Then residue was observed, the bar surfaces were cleaned using a copper scrub pad.). |

The multilayer film structure is then placed under the sealing bars and the actuation switch is pressed. After a seal is made using a 1.2 second dwell time, the structure is set aside for one minute while the sealed areas cool. After cooling, the Mylar™ is carefully removed from the now sealed adhesive/EVOH structure. The adhesive film being tested is fabricated into film every two weeks to assure that no significant hydrolysis of the active anhydride functionality has occurred. During the interim, the film is stored in a dessicator.

Peel strength or adhesion measurements are made by centering five of the sealed areas between the blades of a 2.54 centimeter film cutter leaving 6.35 mm on each side of the sealed area which had not been sealed, and the samples are cut into one inch (2.5 cm) strips. The samples are then peeled along the length of the seal, meaning that the width of the seal being peeled is 12.7 mm. The five samples are peeled using a tensile testing Instron with a 454 gram scale load at a crosshead speed of 12.7 cm/minute and a chart drive setting of 5.08 cm/minute. Peel strengths are recorded in units of grams/cm. The specimens are peeled without controlling the angle of peel. The sealed samples are peeled within a twelve hour period of being sealed.

The non-isothermal crystallization half-life of the adhesive resins described in the present invention is measured by using Differential Scanning Calorimetry (DSC). The Perkin-Elmer DSC-4 is operated non-isothermally by heating a 4 milligram sample of the adhesive resin or resin blend to 220°C, holding for 1 minute, and then cooling at a rate of -20°C/minute to 50°C. The cooling curve is recorded, and the baseline is flattened as much as possible mathematically, utilizing the Perkin Elmer TADS software. A simple first order reaction kinetics equation is used to calculate the half-life crystallization data. The equation used is:$\text{-kt = In} \frac{\text{[x]}}{\text{[1 - x]}}$ where
x = the fraction of polymer in the crystalline phase
k = the crystallization rate constant
t = time.

The calculations are performed on 75 percent of the final crystallization which occurred. Half life data are calculated from the digitized data using the DSC measured final crystallinity of the sample as a best approximation of the final crystallinity. The non-isothermal crystallization half-life of the sample is then calculated using the crystallization rate constant obtained above, then solving for time "t " at a crystallinity of 50 percent of the final crystallinity of the tested sample in question.

### EXAMPLE 1

A three component blend of polymers (ADMER NF 550) comprising an ethylene/butene copolymer with a total butene content of 3.6 percent as measured by ¹³C Nuclear Magnetic Resonance (NMR), an ethylene/propylene copolymer with a total propylene content of 6.9 percent as measured by ¹³C NMR (0.6 percent of the propylene is isotactic or blocked propylene) and a maleic anhydride grafted HDPE is fabricated into blown film as described above. This resin blend has a melt index of 6.4 grams/10 minutes, a density of 0.91 grams/cm³, and a maleic anhydride (MAH) content of 0.24 percent by weight. The blown film structure made with this adhesive resin has an EVOH adhesion level of 150.4 grams/cm. The resin blend has a non-isothermal crystallization half-life of 23.7 seconds and is considered to be an example of this invention.

### EXAMPLE 2

The following blend is prepared in advance by dry blending the components and then melt mixing the components in a single screw 6.35 cm extruder and then used as the adhesive layer in the three component blown film fabrication described above. All percentages are by weight and based on the total adhesive composition:
40 percent LLDPE (Ethylene/Propylene Copolymer, MI=4.5 grams/10 minutes, Density=0.89 grams/cm³);
40 percent LLDPE (Ethylene/Octene Copolymer, MI=6 grams/10 minutes, Density=0.923 grams/cm³); and
20 percent HDPE (Ethylene/Propylene Copolymer, MI=25 grams/10 minutes, Density=0.955 grams/cm³) grafted with 0.9 percent MAH.

This three component adhesive resin blend has a total MAH content of 0.18 percent. The three layer blown film structure has an EVOH adhesion level of 144.9 grams/cm. This thermoplastic adhesive resin blend composition has a non-isothermal crystallization half-life of 25.1 seconds and is an example of this invention.

This resin blend is also used to form single layer blown film for heat seal bonding to EVOH polymers containing different levels of mole percent ethylene. Table I describes the results obtained:

**Table I**

| | | | | |
|---|---|---|---|---|
| Mole percent ethylene in EVOH | 29 | 32 | 38 | 44 |
| EVOH melt index (grams/10 minutes) | 3 | 4.4 | 3.5 | 5.5 |
| Adhesion (grams/cm) | 192.9 | 382.7 | 407 | 471.6 |

### EXAMPLE 3

The following blend is prepared in advance by dry blending the components and then melt mixing the components in a single screw 6.35 cm extruder and then used as the adhesive layer in the three component blown film fabrication described above. All percentages are by weight and based on the total adhesive composition:
20 percent HDPE (Ethylene Homopolymer, MI=10 grams/10 minutes, Density-0.962 grams/cm³) grafted with 1.1 percent MAH; 55 percent LLDPE (Ethylene/Octene Copolymer, MI=6 grams/10 minutes, Density=0.923 grams/cm³); and
25 percent PB 1710 (Polybutene polymer commercially available from Shell Chemical Company, MI= 1.0 gram/10 minutes, Density= 0.909 grams/cm³).

The three component blown film structure using this adhesive resin blend has an EVOH adhesion level of 135.8 grams/cm. This adhesive resin blend composition has a total MAH content of 0.22 percent and a non-isothermal crystallization half-life of 27.4 seconds and is an example of this invention.

### EXAMPLE 4

The following blend is prepared in advance by dry blending the components and then melt mixing the components in a single screw 6.35 cm extruder and then used as the adhesive layer in the three component blown film fabrication described above. All percentages are by weight and based on the total adhesive composition:
20 percent HDPE (Ethylene Homopolymer, MI=10 grams/10 minutes, Density=0.962 grams/cm³) grafted with 1.1 percent MAH;
40 percent ULDPE (Ethylene/Octene Copolymer, MI=1 grams/10 minutes, Density=0.905 grams/cm³); and
40 percent LLDPE (Ethylene/Propylene Copolymer, MI=4.5 grams/10 minutes, Density=0.89 grams/cm³).

The three component blown film structure using this adhesive resin blend has an EVOH adhesion level of 176.8 grams/cm. This adhesive resin blend composition has a total MAH content of 0.22 percent and a non-isothermal crystallization half-life of 22.3 seconds and is clearly an example of the invention. Table II summarizes data from Examples 1-4.

### EXAMPLE 5 (For comparison, not an example of the invention)

The following blend is prepared in advance by dry blending the components and then melt mixing the components in a single screw 6.35 centimeter extruder and then used as the adhesive layer in the three component blown film fabrication described above. All percentages are by weight and based on the total adhesive composition:
20 percent HDPE (Ethylene Homopolymer, MI=10 grams/10 minutes, Density=0.962 grams/cm³) grafted with 1.1 percent by weight MAH;
30 percent LLDPE (Ethylene/Octene Copolymer, MI=6 grams/10 minutes, Density=0.923 grams/cm³); and
50 percent ULDPE (Ethylene/Octene Copolymer, MI=1 gram/10 minutes, Density=0.905 grams/cm³).

The adhesive resin blend has a total MAH content of 0.22 percent and the three component blown film structure has an EVOH adhesion level of 68 grams/centimeter. This resin blend composition has a non-isothermal crystallization half-life of 36.3 seconds, and is not considered to be within the scope of this invention.

### EXAMPLE 6 (For comparison, not an example of the invention)

The following blend is prepared in advance by dry blending the components and then melt mixing the components in a single screw 6.35 centimeter extruder and then used as the adhesive layer in the three component blown film fabrication described above. All percentages are by weight and based on the total adhesive composition:
20 percent HDPE (Ethylene Homopolymer, MI=10 grams/10 minutes, Density=0.962 grams/cm³) grafted with 1.1 percent by weight MAH;
40 percent LLDPE (Ethylene/Octene Copolymer, MI=6 grams/10 minutes, Density=0.923 grams/cm³); and
40 percent ULDPE (Ethylene octene Copolymer, MI=3 grams/10 minutes, Density=0.912 grams/cm³).

The adhesive resin blend has a total MAH content of 0.22 percent and the three component blown film structure has an EVOH adhesion level of 95 grams/centimeter. This resin blend composition has a non-isothermal crystallization half-life of 59.8 seconds, and is not considered to be within the scope of this invention. Table II summarizes data from Examples 1-4 and Comparative Examples 5 and 6:

**Table II**

| Example | Crystallization Half-Life (seconds) | Bond Adhesion* (grams/cm) | MAH Content (percent) |
|---|---|---|---|
| 1 | 23.7 | 150.4 | 0.24 |
| 2 | 25.1 | 144.9 | 0.18 |
| 3 | 27.4 | 135.8 | 0.22 |
| 4 | 22.3 | 176.8 | 0.22 |
| 5** | 36.3 | 68 | 0.22 |
| 6** | 59.8 | 95 | 0.22 |

| | | | |
|---|---|---|---|
| * EVOH adhesion in blown film structures | | | |
| **Comparative examples, not examples of the invention. | | | |

## Claims

1. The use as an adhesive for a polar polymer layer in a blown multilayer film article of a thermoplastic resin blend comprising (i) at least one unmodified linear low density polyethylene ("LLDPE") having a density of 0.89 g/cm³ to 0.93 g/cm³ and a melt index (ASTM D-1238 Condition 190/2.16) of 0.1 grams/10 minutes to 250 grams/10 minutes and (ii) a graft modified high density polyethylene ("HDPE") having a pregrafting density of 0.945 g/cm³ to 0.97 g/cm³, a pregrafting melt index (ASTM D-1238 Condition 190/2.16) of 0.1 grams/10 minutes to 200 grams/10 minutes and, as the graft modifier, an ethylenically unsaturated carboxylic acid or anhydride in an amount of 0.02 to 3.0 weight percent (based on the weight of the HDPE polymer), the blend having a non-isothermal crystallization half-life, as determined by differential scanning calorimetry (as described herein), of less than 30 seconds.

2. A use as claimed in Claim 1, wherein said polar polymer layer is a barrier layer of the multilayer film article.

3. A use as claimed in Claim 2, wherein said article is formed by a single air external ring blown film process.

4. A use as claimed in any one of the preceding claims, wherein said polar polymer is a hydrolyzed ethylene/vinyl acetate copolymer ("EVOH").

5. A use as claimed in Claim 4, wherein said EVOH has an ethylene content of between 2 percent and 60 percent by weight of the EVOH, and a melt index of between 0.2 grams/10 minutes and 50 grams/10 minutes.

6. A use as claimed in Claim 5, wherein said EVOH has an ethylene content of from 15 percent to 45 percent by weight of the EVOH, and a melt index of between 0.5 grams/10 minutes and 20 grams/10 minutes.

7. A use as claimed in any one of the preceding claims, wherein said blend includes between 0.03 and 0.24 weight percent (based upon the total weight of the resin blend) of the ethylenically unsaturated carboxylic acid or anhydride graft modifier.

8. A use as claimed in any one of the preceding claims, wherein said graft modifier is maleic anhydride.

9. A use as claimed in any one of the preceding claims, wherein said blend consists essentially of 30 to 98 weight percent (i) and 2 to 70 weight percent (ii).

10. A use as claimed in any one of the preceding claims, wherein the blend comprises two or more LLDPEs.

11. A use as claimed in any one of the preceding claims, wherein the or each LLDPE is a copolymer of ethylene and a C₃-C₁₂ alpha-olefin.

12. A use as claimed in Claim 11, wherein said LLDPE is a copolymer of ethylene and octene-1.

13. A use as claimed in any one of Claims 10 to 12, wherein the blend comprises:
a first LLDPE having a melt index from 0.1 grams/10 minutes to 25 grams/10 minutes and a density from 0.90 grams per cubic centimeter to 0.93 grams per cubic centimeter and
a second LLDPE having a melt index from 0.1 grams/10 minutes to 25 grams/10 minutes and a density from 0.89 grams per cubic centimeter to 0.92 grams per cubic centimeter.

14. A use as claimed in any one of the preceding claims, wherein the graft modified HDPE comprises a copolymer of ethylene and a C₃-C₁₂ alpha-olefin.

15. A use as claimed in any one of the preceding claims, wherein the graft modified HDPE has a pregrafting melt index from 1 gram/10 minutes to 45 grams/10 minutes.

16. A use as claimed in Claim 15, wherein (i) comprises:
(a) a LLDPE having a melt index from 0.1 grams/10 minutes to 25 grams/ 10 minutes and a density from 0.90 grams per cubic centimeter to 0.93 grams per cubic centimeter and
(b) a LLDPE having a melt index from 0.1 grams/10 minutes to 25 grams/ 10 minutes and a density from 0.89 grams per cubic centimeter to 0.92 grams per cubic centimeter,
and wherein (ii) comprises:
HDPE having a pregrafting melt index from 1 gram/10 minutes to 45 grams/10 minutes, wherein the high density polyethylene is subsequently extrusion graft modified with from 0.02 percent to 3.0 percent maleic anhydride.

17. A use as claimed in any one of Claims 1 to 15, wherein (i) comprises a blend of from 5 percent to 80 percent by weight of a polybutene polymer blended with from 95 percent to 20 percent by weight of at least one copolymer of ethylene with at least one C₃-C₁₂ alpha-olefin.

18. A process of preparing a laminated multilayer film structure by a blown film process in which a polar polymer barrier layer is adhered to another layer by an intermediate thermoplastic resin blend adhesive layer, characterized in that said blend is as defined in any one of the preceding claims.

19. A process of preparing a laminated multilayer film structure by a blown film process in which a polar polymer barrier layer is adhered to another layer by an intermediate thermoplastic resin blend adhesive layer, characterized in that said blend comprises (i) at least one unmodified linear low density polyethylene ("LLDPE") having a density of 0.89 g/cm³ to 0.93 g/cm³ and a melt index (ASTM D-1238 Condition 190/2.16) of 0.1 grams/10 minutes to 250 grams/10 minutes and (ii) a graft modified high density polyethylene ("HDPE") having a pregrafting density of 0.945 g/cm³ to 0.97 g/cm³, a pregrafting melt index (ASTM D-1238 Condition 190/2.16) of 0.1 grams/10 minutes to 200 grams/10 minutes and, as the graft modifier, an ethylenically unsaturated carboxylic acid or anhydride in an amount of 0.02 to 3.0 weight percent (based on the weight of the HDPE polymer), and in that said components and their relative proportions are selected so that the blend has a non-isothermal crystallization half-life, as determined by differential scanning calorimetry (as described herein), of less than 30 seconds.

20. A process as claimed in Claim 19, wherein the polar polymer and/or thermoplastic resin blend is as defined in any one of Claims 2 to 17.

21. A process of preparing a laminated multilayer film structure by a blown film process in which a polar polymer barrier layer is adhered to another layer by an intermediate thermoplastic resin blend adhesive layer, characterized in that said blend comprises (i) at least one unmodified linear low density polyethylene ("LLDPE") having a density of 0.89 g/cm³ to 0.93 g/cm³ and a melt index (ASTM D-1238 Condition 190/2.16) of 0.1 grams/10 minutes to 250 grams/10 minutes and (ii) a graft modified high density polyethylene ("HDPE") having a pregrafting density of 0.945 g/cm³ to 0.97 g/cm³, a pregrafting melt index (ASTM D-1238 Condition 190/2.16) of 0.1 grams/10 minutes to 200 grams/10 minutes and, as the graft modifier, an ethylenically unsaturated carboxylic acid or anhydride in an amount of 0.02 to 3.0 weight percent (based on the weight of the HDPE polymer), and in that the blend is first determined to have a non-isothermal crystallization half-life, as determined by differential scanning calorimetry (as described herein), of less than 30 seconds.

22. A process as claimed in Claim 21, wherein the polar polymer and/or thermoplastic resin blend is as defined in any one of Claims 2 to 17.

## Patentansprüche

1. Verwendung eines thermoplastischen Harzgemisches als Klebemittel für eine polare Polymerschicht in einem Mehrschichtblasfoliengegenstand, umfassend (i) mindestens ein unmodifiziertes lineares Polyethylen mit geringer Dichte ("LLDPE"), das eine Dichte von 0,89 g/cm³ bis 0,93 g/cm³ und einen Schmelzindex (ASTM D-1238 Bedingung 190/2.16) von 0,1 Gramm/10 Minuten bis 250 Gramm/10 Minuten aufweist und (ii) ein pfropfmodifiziertes Polyethylen mit hoher Dichte ("HDPE") mit einer Vorpfropfungsdichte von 0,945 g/cm³ bis 0,97 g/cm³, einem Vorpfropfungsschmelzindex (ASTM D-1238 Bedingung 190/2.16) von 0,1 Gramm/10 Minuten bis 200 Gramm/10 Minuten und als Pfropfmodifizierungsmittel eine ethylenisch ungesättigte Carbonsäure oder ein ethylenisch ungesättigtes Anhydrid in einer Menge von 0,02 bis 3,0 Gewichtsprozent (basierend auf dem Gewicht des HDPE-Polymers), wobei das Gemisch gemäß einer Bestimmung durch Differentialscanningkalorimetrie (wie hierin beschrieben) eine nichtisotherme Kristallisationshalbwertszeit von weniger als 30 Sekunden aufweist.

2. Verwendung nach Anspruch 1, worin die polare Polymerschicht eine Barriereschicht des Mehrschichtfoliengegenstandes ist.

3. Verwendung nach Anspruch 2, worin der Gegenstand durch ein Blasfolienverfahren mit einem einzelnen externen Luftring gebildet wird.

4. Verwendung nach einem der vorhergehenden Ansprüche, worin das polare Polymer ein hydrolysiertes Ethylen/Vinylacetatcopolymer ("EVOH") ist.

5. Verwendung nach Anspruch 4, worin das EVOH einen Ethylengehalt von zwischen 2 Prozent und 60 Prozent bezüglich des Gewichts des EVOH und einen Schmelzindex von zwischen 0,2 Gramm/10 Minuten und 50 Gramm/10 Minuten aufweist.

6. Verwendung nach Anspruch 5, worin das EVOH einen Ethylengehalt von 15 Prozent bis 45 Prozent bezüglich des Gewichts des EVOH und einen Schmelzindex von zwischen 0,5 Gramm/10 Minuten und 20 Gramm/10 Minuten aufweist.

7. Verwendung nach einem der vorhergehenden Ansprüche, worin das Gemisch zwischen 0,03 und 0,24 Gewichtsprozent (basierend auf dem Gesamtgewicht des Harzgemisches) des ethylenisch ungesättigten Carbonsäure- oder Anhydridpfropfmodifizierungsmittels enthält.

8. Verwendung nach einem der vorhergehenden Ansprüche, worin das Pfropfmodifizierungsmittel Maleinsäureanhydrid ist.

9. Verwendung nach einem der vorhergehenden Ansprüche, worin das Gemisch im wesentlichen aus 30 bis 98 Gewichtsprozent (i) und 2 bis 70 Gewichtsprozent (ii) besteht.

10. Verwendung nach einem der vorhergehenden Ansprüche, worin das Gemisch zwei oder mehrere LLDPE enthält.

11. Verwendung nach einem der vorhergehenden Ansprüche, worin das oder jedes LLDPE ein Copolymer von Ethylen und einem C₃-C₁₂-alpha-Olefin ist.

12. Verwendung nach Anspruch 11, worin das LLDPE ein Copolymer von Ethylen und 1-Octen ist.

13. Verwendung nach einem der Ansprüche 10 bis 12, worin das Gemisch umfaßt:
ein erstes LLDPE mit einem Schmelzindex von 0,1 Gramm/10 Minuten bis 25 Gramm/10 Minuten und einer Dichte von 0,90 Gramm pro Kubikzentimeter bis 0,93 Gramm pro Kubikzentimeter und
ein zweites LLDPE mit einem Schmelzindex von 0,1 Gramm/10 Minuten bis 25 Gramm/10 Minuten und einer Dichte von 0,89 Gramm pro Kubikzentimeter bis 0,92 Gramm pro Kubikzentimeter.

14. Verwendung nach einem der vorhergehenden Ansprüche, worin das pfropfmodifizierte HDPE ein Copolymer von Ethylen und einem C₃-C₁₂-alpha-Olefin umfaßt.

15. Verwendung nach einem der vorhergehenden Ansprüche, worin das pfropfmodifizierte HDPE einen Vorpfropfungsschmelzindex von 1 Gramm/10 Minuten bis 45 Gramm/10 Minuten aufweist.

16. Verwendung nach Anspruch 15, worin (i) umfaßt:
(a) ein LLDPE mit einem Schmelzindex von 0,1 Gramm/10 Minuten bis 25 Gramm/10 Minuten und einer Dichte von 0,90 Gramm pro Kubikzentimeter bis 0,93 Gramm pro Kubikzentimeter, und
(b) ein LLDPE mit einem Schmelzindex von 0,1 Gramm/10 Minuten bis 25 Gramm/10 Minuten und einer Dichte von 0,89 Gramm pro Kubikzentimeter bis 0,92 Gramm pro Kubikzentimeter,
und worin (ii) umfaßt:
HDPE mit einem Vorpfropfungsschmelzindex von 1 Gramm/10 Minuten bis 45 Gramm/10 Minuten, worin das Polyethylen mit hoher Dichte nachfolgend mit von 0,02 Prozent bis 3,0 Prozent Maleinsäureanhydrid extrusionspfropfmodifiziert wird.

17. Verwendung nach einem der Ansprüche 1 bis 15, worin (i) ein Gemisch von 5 Prozent bis 80 Prozent bezüglich des Gewichts eines Polybutenpolymers, gemischt mit von 95 Prozent bis 20 Prozent bezüglich des Gewichts mindestens eines Copolymers von Ethylen mit mindestens einem C₃-C₁₂-alpha-Olefin umfaßt.

18. Verfahren zum Herstellen einer laminierten Mehrschichtfolienstruktur durch ein Blasfolienverfahren, worin eine polare Polymerbarriereschicht an eine andere Schicht durch eine zwischenliegende Klebeschicht aus einem thermoplastischen Harzgemisch geklebt wird, dadurch gekennzeichnet, daß das Gemisch wie in einem der vorherhehenden Ansprüche definiert ist.

19. Verfahren zum Herstellen einer laminierten Mehrschichtfolienstruktur durch ein Blasfolienverfahren, worin eine Barriereschicht aus polarem Polymer an eine andere Schicht durch eine zwischenliegende Klebeschicht aus einem thermoplastischen Harzgemisch geklebt wird, dadurch gekennzeichnet, daß das Gemisch umfaßt (i) mindestens ein unmodifiziertes lineares Polyethylen mit geringer Dichte ("LLDPE"), das eine Dichte von 0,89 g/cm³ bis 0,93 g/cm³ und einen Schmelzindex (ASTM D-1238 Bedingung 190/2.16) von 0,1 Gramm/10 Minuten bis 250 Gramm/10 Minuten aufweist und (ii) ein pfropfmodifiziertes Polyethylen mit hoher Dichte ("HDPE") mit einer Vorpfropfungsdichte von 0,945 g/cm³ bis 0,97 g/cm³, einem Vorpfropfungsschmelzindex (ASTM D-1238 Bedingung 190/2.16) von 0,1 Gramm/10 Minuten bis 200 Gramm/10 Minuten und als Pfropfmodifizierungsmittel eine ethylenisch ungesättigte Carbonsäure oder ein ethylenisch ungesättigtes Anhydrid, in einer Menge von 0,02 bis 3,0 Gewichtsprozent (basierend auf dem Gewicht des HDPE-Polymers), und dardurch gekennzeichnet, daß die Komponenten und ihre relativen Anteile derart ausgewählt werden, daß das Gemisch bei Bestimmung durch Differentialscanningkalorimetrie (wie hierin beschrieben) eine nichtisotherme Kristallisationshalbwertszeit von weniger als 30 Sekunden aufweist.

20. Verfahren nach Anspruch 19, worin das polare Polymer- und/oder das thermoplastische Harzgemisch wie in einem der Ansprüche 2 bis 17 definiert sind.

21. Verfahren zum Herstellen einer laminierten Mehrschichtfolienstruktur durch ein Blasfolienverfahren, worin eine Barriereschicht aus polarem Polymer an eine andere Schicht durch eine zwischenliegende Klebeschicht aus einem thermoplastischen Harzgemisch geklebt wird, dadurch gekennzeichnet, daß das Gemisch umfaßt (i) mindestens ein unmodifiziertes lineares Polyethylen mit geringer Dichte ("LLDPE"), das eine Dichte von 0,89 g/cm³ bis 0,93 g/cm³ und einen Schmelzindex (ASTM D-1238 Bedingung 190/2.16) von 0,1 Gramm/10 Minuten bis 250 Gramm/10 Minuten aufweist und (ii) ein pfropfmodifiziertes Polyethylen mit hoher Dichte ("HDPE") mit einer Vorpfropfungsdichte von 0,945 g/cm³ bis 0,97 g/cm³, einem Vorpfropfungsschmelzindex (ASTM D-1238 Bedingung 190/2.16) von 0,1 Gramm/10 Minuten bis 200 Gramm/10 Minuten und als Pfropfmodifizierungsmittel eine ethylenisch ungesättigte Carbonsäure oder ein ethylenisch ungesättigtes Anhydrid, in einer Menge von 0,02 bis 3,0 Gewichtsprozent (basierend auf dem Gewicht des HDPE-Polymers), und dadurch gekennzeichnet, daß zuerst bestimmt wird, daß das Gemisch gemäß Bestimmung durch Differentialscanningkalorimetrie (wie hierin beschrieben) eine nichtisotherme Kristallisationshalbwertszeit von weniger als 30 Sekunden aufweist.

22. Verfahren nach Anspruch 21, worin das polare Polymer- und/oder thermoplastische Harzgemisch wie in einem der Ansprüche 2 bis 17 definiert sind.

## Revendications

1. Utilisation en tant qu'adhésif pour une couche de polymère polaire dans un article formé d'un film multicouche soufflé, d'un mélange de résines thermoplastiques comprenant (i) au moins un polyéthylène faible densité linéaire ("PEBDL") non-modifié qui présente une masse volumique de 0,89 g/cm³ à 0,93 g/cm³ et un indice de fluidité à chaud (ASTM D-1238, condition 190/2,16) de 0,1 g/10 minutes à 250 g/10 minutes, et (ii) un polyéthylène haute densité ("PEHD") modifié par greffage qui présente une masse volumique avant greffage de 0,945 g/cm³ à 0,97 g/cm³, un indice de fluidité à chaud avant greffage (ASTM D-1238, condition 190/2,16) de 0,1 g/10 minutes à 200 g/10 minutes, et en tant qu'agent de greffage, un anhydride ou acide carboxylique à insaturation éthylénique en une quantité de 0,02 à 3,0 % en poids (par rapport au poids du polymère PEHD), le mélange présentant un temps de demi-cristallisation non isothermique, tel que déterminé par analyse calorimétrique différentielle (telle que décrite ici), inférieur à 30 secondes.

2. Utilisation selon la revendication 1, dans laquelle ladite couche de polymère polaire est une couche barrière de l'article formé d'un film multicouche.

3. Utilisation selon la revendication 2, dans laquelle ledit article est formé par un procédé de film soufflé à un seul anneau extérieur d'air.

4. Utilisation selon l'une quelconque des précédentes revendications, dans laquelle ledit polymère polaire est un copolymère hydrolysé d'éthylène et d'acétate de vinyle ("EVOH")

5. Utilisation selon la revendication 4, dans laquelle ledit EVOH présente une teneur en éthylène de 2 % à 60 % en poids d'EVOH, et un indice de fluidité à chaud de 0,2 g/10 minutes à 50 g/10 minutes.

6. Utilisation selon la revendication 5, dans laquelle ledit EVOH présente une teneur en éthylène de 15 % à 45 % en poids d'EVOH, et un indice de fluidité à chaud de 0,5 g/10 minutes à 20 g/10 minutes.

7. Utilisation selon l'une quelconque des précédentes revendications, dans laquelle ledit mélange englobe de 0,03 à 0,24 % en poids (par rapport au poids total du mélange de résine) d'agent de greffage de type anhydride ou acide carboxylique à insaturation éthylénique.

8. Utilisation selon l'une quelconque des précédentes revendications, dans laquelle ledit agent de greffage est l'anhydride maléique.

9. Utilisation selon l'une quelconque des précédentes revendications, dans laquelle ledit mélange comprend essentiellement de 30 à 98 % en poids de (i), et de 2 à 70 % en poids de (ii).

10. Utilisation selon l'une quelconque des précédentes revendications, dans laquelle le mélange comprend deux PEBDL ou plus.

11. Utilisation selon l'une quelconque des précédentes revendications, dans laquelle le PEBDL ou chaque PEBDL est un copolymère d'éthylène et d'une alpha-oléfine en C₃-C₁₂.

12. Utilisation selon la revendication 11, dans laquelle ledit PEBDL est un copolymère d'éthylène et d'octène-1.

13. Utilisation selon l'une quelconque des revendications 10 à 12, dans laquelle le mélange comprend :
un premier PEBDL présentant un indice de fluidité à chaud allant de 0,1 g/10 minutes à 25 g/10 minutes et une masse volumique allant de 0,90 gramme par centimètre cube à 0,93 gramme par centimètre cube, et
un second PEBDL présentant un indice de fluidité à chaud allant de 0,1 g/10 minutes à 25 g/10 minutes et une masse volumique allant de 0,89 gramme par centimètre cube à 0,92 gramme par centimètre cube.

14. Utilisation selon l'une quelconque des précédentes revendications, dans laquelle le PEHD modifié par greffage comprend un copolymère d'éthylène et d'une alpha-oléfine en C₃-C₁₂.

15. Utilisation selon l'une quelconque des précédentes revendications, dans laquelle le PEHD modifié par greffage présente un indice de fluidité à chaud avant greffage allant de 1 g/10 minutes à 45 g/10 minutes.

16. Utilisation selon la revendication 15, dans laquelle (i) comprend :
(a) un PEBDL présentant un indice de fluidité à chaud allant de 0,1 g/10 minutes à 25 g/10 minutes et une masse volumique allant de 0,90 gramme par centimètre cube à 0,93 gramme par centimètre cube, et
(b) un PEBDL présentant un indice de fluidité à chaud allant de 0,1 g/10 minutes à 25 g/10 minutes et une masse volumique allant de 0,89 gramme par centimètre cube à 0,92 gramme par centimètre cube,
et dans laquelle (ii) comprend :
un PEHD présentant un indice de fluidité à chaud avant greffage allant de 1 g/10 minutes à 45 g/10 minutes, sachant que le polyéthylène haute densité est ultérieurement modifié par greffage dans l'extrusion avec 0,02 % à 3,0 % d'anhydride maléique.

17. Utilisation selon l'une quelconque des revendications 1 à 15, dans laquelle (i) comprend un mélange de 5 % à 80 % en poids d'un polybutène polymère avec de 95 % à 20 % en poids d'au moins un copolymère d'éthylène et d'au moins une alpha-oléfine en C₃-C₁₂.

18. Procédé de préparation d'une structure stratifiée de film multicouche par un procédé de film soufflé, dans lequel on fait adhérer une couche barrière de polymère polaire à une autre couche au moyen d'une couche adhésive intermédiaire d'un mélange de résines thermoplastiques, caractérisé en ce que ledit mélange est tel que défini dans l'une quelconque des précédentes revendications.

19. Procédé de préparation d'une structure stratifiée de film multicouche par un procédé de film soufflé, dans lequel on fait adhérer une couche barrière de polymère polaire à une autre couche au moyen d'une couche adhésive intermédiaire d'un mélange de résines thermoplastiques, caractérisé en ce que ledit mélange comprend (i) au moins un polyéthylène basse densité linéaire ("PEBDL") non modifié présentant une masse volumique de 0,89 g/cm³ à 0,93 g/cm³ et un indice de fluidité à chaud (ASTM D-1238, condition 190/2,16) de 0,1 g/10 min. à 250 g/10 min., et (ii) un polyéthylène haute densité ("PEHD") modifié par greffage présentant une masse volumique avant greffage de 0,945 g/cm³ à 0,97 g/cm³ et un indice de fluidité à chaud avant greffage (ASTM D-1238, condition 190/2,16) de 0,1 g/10 min. à 200 g/10 min., et en tant qu'agent de greffage, un anhydride ou acide carboxylique à insaturation éthylénique en une quantité de 0,02 à 3,0 % en poids (par rapport au poids du polymère PEHD), et en ce que lesdits composants et leurs proportions relatives sont choisis pour que le mélange présente un temps de demi-cristallisation non isothermique, tel que déterminé par une analyse calorimétrique différentielle (telle que décrite ici), inférieur à 30 secondes.

20. Procédé selon la revendication 19, dans lequel le polymère polaire et/ou le mélange de résines thermoplastiques sont tels que définis dans l'une quelconque des revendications 2 à 17.

21. Procédé de préparation d'une structure stratifiée de film multicouche par un procédé de film soufflé, dans lequel on fait adhérer une couche barrière de polymère polaire à une autre couche au moyen d'une couche adhésive intermédiaire d'un mélange de résines thermoplastiques, caractérisé en ce que ledit mélange comprend (i) au moins un polyéthylène basse densité linéaire ("PEBDL") non-modifié présentant une masse volumique de 0,89 g/cm³ à 0,93 g/cm³ et un indice de fluidité à chaud (ASTM D-1238, condition 190/2,16) de 0,1 g/10 min. à 250 g/10 min., et (ii) un polyéthylène haute densité ("PEHD") modifié par greffage présentant une masse volumique avant greffage de 0,945 g/cm³ à 0,97 g/cm³ et un indice de fluidité à chaud avant greffage (ASTM D-1238, condition 190/2,16) de 0,1 g/10 min. à 200 g/10 min., et en tant qu'agent de greffage, un anhydride ou acide carboxylique à insaturation éthylénique en une quantité de 0,02 à 3,0 % en poids (par rapport au poids du polymère PEHD), et en ce que l'on détermine tout d'abord que le mélange présente un temps de demi-cristallisation non isothermique, tel que déterminé par analyse calorimétrique différentielle (telle que décrite ici), inférieur à 30 secondes.

22. Procédé selon la revendication 21, dans lequel le polymère polaire et/ou le mélange de résines thermoplastiques sont tels que définis dans l'une quelconque des revendications 2 à 17.
